# EUROPÄISCHE PATENTSCHRIFT

(11) **EP 2 538 609 B1**
(45) Veröffentlichungstag und Bekanntmachung des Hinweises auf die Patenterteilung: **06.01.2016**
(21) Anmeldenummer: 11170892.1
(22) Anmeldetag: 22.06.2011
(51) Int. Cl.: H04L 12/12, H04L 12/40, G05B 19/418

(54) **ENERGIEEINSPARUNG IN EINEM NETZWERKKNOTEN EINES AUTOMATISIERUNGSNETZWERKS**
ENERGY SAVING IN A NETWORK NODE OF AN AUTOMATION NETWORK
ECONOMIE D'ÉNERGIE DANS UN NOEUD DE RÉSEAU D'UN RÉSEAU D'AUTOMATISATION

(43) Veröffentlichungstag der Anmeldung: 26.12.2012
(73) Patentinhaber: Siemens Aktiengesellschaft, 80333 München (DE)
(72) Erfinder: Malsch, Christian, 75181 Pforzheim-Eutingen (DE)

(56) Entgegenhaltungen:
- EP-A2- 0 773 650
- WO-A2-2010/112173
- US-A1- 2007 161 352
- US-A1- 2009 082 885

## Beschreibung

Die Erfindung betrifft ein Verfahren zur Energieeinsparung in einem Netzwerkknoten eines Automatisierungsnetzwerks.

Aus dem Stand der Technik sind Ansätze zur Reduzierung des Stromverbrauchs von Netzwerkkomponenten bekannt. Ein sogenanntes "Energy Efficient Ethernet" ist bereits unter der Norm IEEE 802.3AZ genormt. Außerdem beschreibt die US 6,993,667 B1 einen Receiver mit zwei Energiesparmodi. US 2007/0041387 A1 offenbart Steuerungseinheiten zur Kommunikation von Strommanagementinformationen über das Netzwerkkabel.

Das Dokument US2007161352 offenbart ein Automatisierungsnetzwerk, wobei die Netzwerkgeräte an Netzwerkanschlüssen des Netzwerksknotens angeschlossen sind und wobei der Netzwerksknoten die Energie-Einspar-Befehlsdaten an das zumindest eine Netzwerkgerät weiterleitet.

Demgegenüber liegt der Erfindung die Aufgabe zugrunde, ein verbessertes Verfahren zur Energieeinsparung in einem Netzwerkknoten, einen verbesserten Netzwerkknoten, ein verbessertes Automatisierungsnetzwerk und ein verbessertes Computerprogrammprodukt zu schaffen.

Die der Erfindung zugrunde liegenden Aufgaben werden mit den Merkmalen der unabhängigen Patentansprüche gelöst. Ausführungsformen der Erfindung sind in den abhängigen Patentansprüchen gegeben.

Die Erfindung betrifft ein Verfahren zur Energieeinsparung in einem Netzwerkknoten eines Automatisierungsnetzwerks. Netzwerkgeräte sind an Netzwerkanschlüsse des Netzwerkknotens angeschlossen.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weitere in einem Automatisierungsnetzwerk verwendete Protokölle können beispielsweise sein: Internet Protocol (IP), Transmission Control Protocol (TCP), Foundation Fieldbus, Common Industrial Protocol (CIP), Interbus, Hart, Ethercat, Ethernet Powerlink, Modbus, Sercos, Safetynet.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren und/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein- und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Zunächst werden durch den Netzwerkknoten Energieeinsparbefehlsdaten empfangen. Die Energieeinsparbefehlsdaten sind dazu bestimmt, zumindest eines der Netzwerkgeräte in einen Energiesparzustand zu schalten. im Energiesparzustand verbraucht das zumindest eine Netzwerkgerät weniger Energie als in einem Betriebszustand. Der Energiesparzustand kann beispielsweise ein Standby-Zustand des Netzwerkgeräts sein. Der Betriebszustand ist der Zustand des Netzwerkgeräts, der während des Automatisierungsprozesses von dem Netzwerkgerät angenommen wird, wenn es Daten für den Automatisierungsprozess erzeugen oder verarbeiten oder weiterleiten muss. Der Energiesparzustand kann auch ein Zustand sein, in dem das Netzwerkgerät keine Energie verbraucht. Beispielsweise ist das Netzwerkgerät im Energiesparzustand dann ganz abgeschaltet. Es ist zu beachten, dass es vorteilhaft ist, wenn das Netzwerkgerät zumindest durch ein Signal des Netzwerkknotens wieder in den Betriebszustand oder in einen anderen Energiesparzustand geschaltet werden kann. Dies könnte beispielsweise über ein sogenanntes "Wake on LAN"-Signal geschehen.

Die Energieeinsparbefehlsdaten werden beispielsweise durch eine Steuerungseinheit des Automatisierungsnetzwerks an das Netzwerkgerät gesendet, wenn es zu Stillständen des Automatisierungsprozesses oder zu einer Wartung oder zu einer Pause kommt. Beispielsweise können Netzwerkgeräte in den Energiesparzustand geschaltet werden, wenn an dem Produktionsprozess beteiligte Arbeiter eine Pause einlegen und der Automatisierungsprozess ebenfalls unterbrochen werden soll.

Die Energieeinsparbefehlsdaten können beispielsweise Daten zur Energieeinsparung gemäß des so genannten PROFIenergy-Profils sein.

Die Energieeinsparbefehlsdaten werden von dem Netzwerkknoten an das Netzwerkgerät weitergeleitet. Außerdem werden die Energieeinsparbefehlsdaten durch den Netzwerkknoten ausgewertet. Unter der Auswertung der Energieeinsparbefehlsdaten wird hier insbesondere verstanden, dass der Netzwerkknoten den Inhalt der Energieeinsparbefehlsdaten auslesen und auswerten kann. Der Netzwerkknoten kann also beispielsweise nach der Auswertung der Energieeinsparbefehlsdaten Informationen über die Energieeinsparbefehlsdaten speichern. Beispielsweise speichert der Netzwerkknoten, dass das Netzwerkgerät durch die Energieeinsparbefehlsdaten in den Energiesparzustand geschaltet wird.

Anschließend erfolgt eine Energieeinsparung im Netzwerkknoten. Der Netzwerkknoten gibt keine oder eine reduzierte Menge an Daten an das Netzwerkgerät aus und/oder empfängt eine reduzierte Menge an Daten oder keine Daten von dem Netzwerkgerät, wenn sich das Netzwerkgerät im Energiesparzustand befindet. Eine Energieeinsparung im Netzwerkknoten erfolgt dadurch, dass zumindest ein Teil des Netzwerkknotens in einen energiesparenden Zustand versetzt wird. Der Teil wird durch den zumindest einen Netzwerkanschluss bestimmt, über den aufgrund des Energiesparzustands des zumindest einen Netzwerkgeräts keine Daten oder nur eine reduzierte Menge an Daten ausgegeben und/oder empfangen wird.

Es wird also der Teil des Netzwerkknotens in den energiesparenden Zustand geschaltet, der für eine Datenübertragung an das Netzwerkgerät, das sich im Energiesparzustand befindet, benötigt wird. Wenn beispielsweise ein Netzwerkknoten über mehrere Anschlüsse verfügt und für eine Hälfte der Anschlüsse ein erster Prozessor des Netzwerkknotens für die Datenweiterleitung verwendet wird und für die Datenweiterleitung über die zweite Hälfte der Netzwerkanschlüsse ein zweiter Prozessor, so kann der erste Prozessor in den energiesparenden Zustand geschaltet werden, wenn alle Netzwerkgeräte, die an der ersten Hälfte der Anschlüsse angeschlossen sind, in den Energiesparzustand geschaltet sind.

Es wird nach Ausführungsformen der Erfindung also ermöglicht, Energie im Netzwerkknoten einzusparen, ohne dass die Funktionsweise des Automatisierungsnetzwerks beeinträchtigt wird. Dadurch, dass der Netzwerkknoten nur zu dem Teil in den energiesparenden Modus geschaltet wird, der ohnehin nicht benötigt werden, da dieser Teil nur für die Weiterleitung von Daten an Netzwerkgeräte zuständig wäre, die sich im Energiesparzustand befinden.

Nach Ausführungsformen der Erfindung empfängt der Netzwerkknoten ein Antwortsignal als Antwort auf die Energieeinsparbefehlsdaten von dem zumindest einem Netzwerkgerät und wertet dieses aus. Dabei erfolgt die Energieeinsparung im Netzwerkknoten erst nach Empfang und Auswertung des zumindest einen Antwortsignals. Mit anderen Worten wartet der Netzwerkknoten auf das Antwortsignal, bevor der Teil in den energiesparenden Zustand versetzt wird. Das Antwortsignal kann sozusagen als Quittung des Netzwerkgeräts verstanden werden, dafür, dass das Netzwerkgerät in den Energiesparzustand geschaltet wird.

Solch ein Antwortsignal ist vorteilhaft, da beispielsweise das Netzwerkgerät die Schaltung in den Energiesparzustand nicht mit dem Antwortsignal bestätigen kann, wenn beispielsweise ein Notzustand oder ein anderes Ereignis vorliegt, das eine Schaltung des Netzwerkgeräts in den Energiesparzustand verbietet. In diesem Fall ist es vorteilhaft, wenn der Teil des Netzwerkknotens nicht in den energiesparenden Zustand geschaltet wird, da sonst die Kommunikation mit dem Netzwerkgerät unterbrochen worden wäre.

Nach Ausführungsformen der Erfindung umfassen die Energieeinsparbefehlsdaten eine Zeitdauer oder einen Endzeitpunkt. Durch die Zeitdauer oder den Endzeitpunkt wird die Zeitdauer definiert, für die das zu eine Netzwerkgerät in den Energiesparzustand geschaltet wird. Der Teil des Netzwerkknotens wird für eine kürzere Zeit oder die gleiche Zeitdauer in den energiesparenden Zustand geschaltet.

Solch eine vordefinierte Zeitdauer ist vorteilhaft, da sowohl das Netzwerkgerät als auch der Teil des Netzwerkknotens, der sich im energiesparenden Zustand befindet, rechtzeitig vor Ablauf der Zeitdauer in den Betriebszustand geschaltet werden kann, sodass eventuell zu verarbeitende oder weiterzuleitende Daten direkt verarbeitet oder weitergeleitet werden können.

Diese vordefinierte Zeitdauer ist zum Beispiel dann vorteilhaft, wenn das Netzwerkgerät während einer Pause des Produktionsprozesses in den Energiesparzustand geschaltet werden soll. In diesem Fall stellt der Netzwerkknoten die Zeitdauer bei Auswertung der Energieeinsparbefehlsdaten fest und legt für sich die kürzere oder die gleiche Zeitdauer fest, für die er in den energiesparenden Zustand geschaltet wird. Alternativ dazu kann die kürzere oder die gleiche Zeitdauer, für die der Netzwerkknoten in den energiesparenden Zustand geschaltet wird, auch von einer Steuerungseinheit des Automatisierungsnetzwerks festgelegt werden. In diesem Fall wird die Zeitdauer für den energiesparenden Zustand zusammen mit den Energieeinsparbefehlsdaten übertragen und von dem Netzwerkknoten bei der Auswertung der Energieeinsparbefehlsdaten gelesen. Es ist vorteilhaft, wenn der Netzwerkknoten für die Kürze der Zeitdauer in den energiesparenden Zustand geschaltet wird, da der Netzwerkknoten in diesem Fall bereits Signale und Daten empfangen kann, die an das Netzwerkgerät weitergeleitet werden sollen, wenn das Netzwerkgerät noch nicht im Betriebszustand ist. Somit kann das Netzwerkgerät direkt mit den Signalen oder Daten versorgt werden, wenn es in den Betriebszustand geschaltet wird.

Nach Ausführungsformen der Erfindung schaltet sich der Netzwerkknoten nach dem Ablauf der Zeitdauer selbständig ganz oder teilweise in den Betriebszustand und erzeugt Energieeinsparbeendigungs-Befehlsdaten, die dann an das zumindest eine Netzwerkgerät übertragen werden. Mit anderen Worten wird der Netzwerkknoten nach dem Ablauf der Zeitdauer wieder angeschaltet. Die Energieeinsparbeendigungs-Befehlsdaten werden durch den Netzwerkknoten erzeugt und durch den Netzwerkknoten an das zumindest eine Netzwerkgerät übertragen.

Nach Ausführungsformen der Erfindung kann der Netzwerkknoten den Zustand der angeschlossenen Netzwerkgeräte aus Protokollelementen erkennen. Der Zustand wird beispielsweise durch einen übergeordneten Controller, wie zum Beispiel eine speicherprogrammierbare Steuerung, über den Netzwerkknoten an das Netzwerkgerät übertragen. Beispielsweise kann in der Firmware des Netzwerkknotens ein anschlussbasierter Filter dafür sorgen, dass bestimmte Telegramme durch den Netzwerkknoten erkannt und ausgewertet werden. Nach Auswertung des Telegramms kann der Netzwerkknoten entscheiden, ob und zu welchem Teil er in den energiesparenden Zustand geschaltet wird.

Ein Erkennen der Zustände der angeschlossenen Netzwerkgeräte durch den Netzwerkknoten ist vorteilhaft, weil dem Netzwerkknoten somit die Zustände alleine aufgrund der ohnehin schon versendeten Energie-Einspar-Befehlsdaten und/oder der Energie-Einspar-Beendigungs-Befehlsdaten bekannt sind. Es werden also keine zusätzlichen Signal benötigt, um dem Netzwerkknoten Informationen über die Zustände der Netzwerkgeräte mitzuteilen.

Dem Netzwerkknoten werden vorab per Projektierung zu erkennende Protokollelemente und/oder Zeitpunkte oder Zeitdauern mitgeteilt, bei deren Eintreten der Netzwerkknoten zumindest zu einem Teil in den energiesparenden Zustand geschaltet werden soll.

Nach Ausführungsformen der Erfindung sind zumindest zwei Netzwerkgeräte direkt oder indirekt mit zumindest einem der Netzwerkanschlüsse des Netzwerkknotens verbunden. Es wird in diesem Fall nur dann eine reduzierte Menge an Daten oder keine Daten über den zumindest einen Netzwerkanschluss ausgegeben und/oder empfangen, wenn sich alle der zumindest zwei Netzwerkgeräte im Energiesparzustand befinden. Mit anderen Worten wird in diesem Falle auch der Netzwerkknoten zumindest zu einem Teil in den energiesparenden Zustand geschaltet, wenn sich alle der zumindest zwei Netzwerkgeräte im Energiesparzustand befinden. Somit wird vermieden, dass die Kommunikation über den Netzwerkknoten zu einem der Netzwerkgeräte unterbrochen wird, wenn der Teil des Netzwerkknotens in den energiesparenden Zustand geschaltet wird.

Nach Ausführungsformen der Erfindung verfügt der Netzwerkknoten über eine Adresstabelle, in der Adressen der Netzwerkgeräte gespeichert sind, die an den Netzwerkknoten angeschlossen sind. Die Adresstabelle umfasst ferner für jede der Adressen einen diesen Adressen zugeordneten Netzwerkanschluss des Netzwerkknotens. Somit kann durch den Netzwerkknoten einer Adresse jeweils der Netzwerkanschluss zugeordnet werden, an dem das Netzwerkgerät mit dieser Adresse angeschlossen ist.

Nach Ausführungsformen der Erfindung werden Energieeinsparbeendigungs-Befehlsdaten über einen Netzwerkanschluss des Netzwerkknotens empfangen. Die Energieeinsparbeendigungs-Befehlsdaten sind dazu bestimmt, bei Empfang durch das zumindest eine Netzwerkgerät dieses zumindest eine Netzwerkgerät in einen Betriebszustand mit gegenüber dem Energiesparzustand erhöhter Energieaufnahme zu schalten. Es ist zu beachten, dass durch die Energieeinsparbeendigungs-Befehlsdaten das Netzwerkgerät auch von dem Energiesparzustand in einen anderen Energiesparzustand geschaltet werden kann. In dem anderen Energiesparzustand verbraucht das Netzwerkgerät beispielsweise mehr Energie als im ersten Energiesparzustand. Beispielsweise könnte ein Netzwerkgerät von einem ausgeschalteten Zustand in einen sogenannten Standby-Zustand geschaltet werden. Alternativ könnte das Netzwerkgerät auch von dem ausgeschalteten Zustand in den Betriebszustand geschaltet werden, den es für den Ablauf des Automatisierungsprozesses normalerweise annimmt oder von dem Standby-Zustand in den Betriebszustand, den es normalerweise bei Ausführung des Automatisierungsprozesses annimmt.

Die Energieeinsparbeendigung-Befehlsdaten können beispielsweise Daten nach dem sogenannten PROFIenergy-Profil sein.

Die Energieeinsparbeendigungs-Befehlsdaten werden durch den Netzwerkknoten ausgewertet. Daraufhin erfolgt ein Wiederanschalten des zumindest zum Teil in den energiesparenden Zustand geschalteten Netzwerkknotens. Mit anderen Worten wird der Teil des Netzwerkknotens wieder angeschaltet, der aufgrund des Energiesparzustands des Netzwerkgeräts in dem energiesparenden Zustand war. Danach werden die Energieeinsparbeendigungs-Befehlsdaten an das zumindest eine Netzwerkgerät weitergeleitet.

Nach Ausführungsformen der Erfindung weist der Netzwerkknoten einen Pufferspeicher auf. In dem Pufferspeicher werden Daten gespeichert, die an das zumindest eine Netzwerkgerät weitergeleitet werden sollen, solange sich das zumindest eine Netzwerkgerät im Energiesparzustand befindet. Solche Ausführungsformen der Erfindung mögen vorteilhaft sein, weil Daten, die an das Netzwerkgerät durch den Netzwerkknoten weitergeleitet werden sollen, zwischengespeichert werden. Somit gehen die Daten nicht verloren, obwohl sich das Netzwerkgerät noch im Energiesparzustand befindet.

Nach Ausführungsformen der Erfindung speichert der Netzwerkknoten die Energiezustände der angeschlossenen Netzwerkgeräte in einem Zustandsspeicher. Der Energiezustand eines der Netzwerkgeräte ist der Betriebszustand oder der Energiesparzustand des jeweiligen Netzwerkgeräts. Anhand dieser gespeicherten Energiezustände kann der Netzwerkknoten vorteilhafterweise bestimmen, ob und zu welchem Teil er sich in den energiesparenden Zustand schalten soll.

Nach Ausführungsformen der Erfindung wird der Energiezustand des zumindest einen Netzwerkgeräts von einem weiteren Netzwerkgerät mittels Energiezustandsabfrage-Befehlsdaten abgefragt. Das weitere Netzwerkgerät kann hier beispielsweise ein übergeordneter Controller des Automatisierungsnetzwerks sein, der die Energiezustände der Netzwerkgeräte unregelmäßig oder regelmäßig abfragt. Die Energiezustandsabfrage-Befehlsdaten werden über den Netzwerkknoten übertragen. Der Netzwerkknoten beantwortet in diesem Falle anstelle des Netzwerkgeräts die Anfrage. Dies geschieht dadurch, dass der Netzwerkknoten bei Empfang der Energie Zustandabfragebefehlsdaten den Zustand des Netzwerkgeräts aus dem Zustandsspeicher ausliest und ein Beantwortungssignal an das weitere Netzwerkgerät ausübt. Das Beantwortungssignal umfasst den Energiezustand des zumindest einen Netzwerkgeräts. Mit anderen Worten beantwortet also der Netzwerkknoten die Zustandsabfrage von dem weiteren Netzwerkgerät.

Dies ist vorteilhaft, da so das Netzwerkgerät, das sich beispielsweise im Energiezustand befindet, keine Daten empfangen und senden muss. Falls ein Netzwerkgerät im Energiesparzustand Daten empfangen und/oder senden müsste, würde dies bedeuten, dass das Netzwerkgerät nicht mehr so viel Energie spart wie normalerweise im Energiesparzustand. Dies könnte sogar so weit gehen, dass das Netzwerkgerät bei Empfang der Zustandabfrage wieder in den Betriebszustand geschaltet wird und keinerlei Energie mehr eingespart wird. Dies wird dadurch vermieden, dass die Zustandsabfrage durch den Netzwerkknoten beantwortet wird.

Nach Ausführungsformen der Erfindung umfasst das Automatisierungsnetzwerk einen weiteren Netzwerkknoten. Der weitere Netzwerkknoten ist mit den Netzwerkknoten über zumindest einen der Netzwerkanschlüsse verbunden. Außerdem sind weitere Netzwerkgeräte an den weiteren Netzwerkknoten angeschlossen. Es werden nur dann keine Daten oder eine reduzierte Menge an Daten zu den Netzwerkgeräten über den Netzwerkanschluss an den weiteren Netzwerkknoten ausgegeben, wenn sich alle an den weiteren Netzwerkknoten angeschlossenen weiteren Netzwerkgeräte im Energiesparzustand befinden. Mit anderen Worten berücksichtigt der Netzwerkknoten die Netzwerktopologie. Dies kann entweder bei der Projektierung in dem Netzwerkknoten eingespeichert werden oder aber der Netzwerkknoten umfasst eine Adressdatenbank, in der gespeichert wird, über welchen Anschluss Daten an welche Netzwerkadresse weitergeleitet werden. Somit ist dem Netzwerkknoten bekannt, wenn an einem der Netzwerkanschlüsse mehrere Netzwerkgeräte angeschlossen sind. Der Netzwerkknoten wandelt sich nur zumindest zum Teil in den energiesparenden Zustand, wenn alle Netzwerkgeräte, die an dem Netzwerkanschluss angeschlossen sind, in den Energiesparzustand geschaltet wurden. Falls ein Antwortsignal als Auslöser für die Schaltung des Netzwerkknotens in den energiesparenden Zustand erwartet wird, schaltet sich der Netzwerkknoten erst dann zum Teil in den energiesparenden Zustand, wenn das Antwortsignal von allen an den Netzwerkknoten angeschlossenen Netzwerkgeräten empfangen wurde.

Nach Ausführungsformen der Erfindung ist die Verbindung zwischen dem Netzwerkknoten und dem zumindest einem Netzwerkgerät eine sicherheitsrelevante Verbindung des Automatisierungsnetzwerks. Eine sicherheitsrelevante Verbindung kann beispielsweise dann vorliegen, wenn aufgrund von Sicherheitsüberlegungen die Verbindung als redundante Datenverbindung für eine andere Verbindung benötigt wird. Dies kann beispielsweise bei sicherheitsrelevanten Anwendungen vorgeschrieben oder wünschenswert sein. Falls nun alle Netzwerkgeräte an dem Netzwerkanschluss sich in dem Energiezustand befinden, wird die Energieeinsparung im Netzwerkknoten eingeleitet. Mit anderen Worten wird der Netzwerkknoten in den energiesparenden Zustand geschaltet. Die sicherheitsrelevante Verbindung wird jedoch trotzdem aufrechterhalten. Der Netzwerkknoten wird also nur so weit in den energiesparenden Zustand geschaltet, dass keine Daten mehr an die Netzwerkgeräte ausgegeben werden. Jedoch können trotzdem noch Daten über die sicherheitsrelevante Verbindung im Falle, dass diese Verbindung für eine sicherheitskritische Anwendung benötigt wird, übertragen werden.

In einem weiteren Aspekt betrifft die Erfindung einen Netzwerkknoten für ein Automatisierungsnetzwerk. Der Netzwerkknoten umfasst Mittel zum Empfang von Energieeinsparbefehlsdaten. Die Energieeinsparbefehlsdaten sind dazu bestimmt, zumindest eines der Netzwerkgeräte in einen Energiezustand zu schalten. Dieses zumindest eine Netzwerkgerät verbraucht im Energiezustand weniger Energie als in seinem Betriebszustand. Außerdem umfasst der Netzwerkknoten Mittel zur Weiterleitung der Energieeinsparbefehlsdaten an das zumindest eine Netzwerkgerät und Mittel zum Auswerten der Energieeinsparbefehlsdaten. Ferner umfasst der Netzwerkknoten Mittel zur Energieeinsparung im Netzwerkknoten. Wenn sich ein Netzwerkgerät im Energiezustand befindet, werden keine oder eine reduzierte Menge an Daten an das Netzwerkgerät durch den Netzwerkknoten ausgegeben. Die Energieeinsparung im Netzwerkknoten erfolgt nun dadurch, dass zumindest ein Teil des Netzwerkknotens ebenfalls in einen energiesparenden Zustand geschaltet wird. Der Teil wird dabei durch den zumindest einen Netzwerkanschluss bestimmt, über den aufgrund des Energiezustandes des zumindest einen Netzwerkgeräts keine Daten oder nur eine reduzierte Menge an Daten ausgegeben und/oder empfangen werden.

Nach Ausführungsformen der Erfindung ist der Netzwerkknoten zur Durchführung eines Verfahrens nach Ausführungsformen der Erfindung ausgebildet.

In noch einem weiteren Aspekt der Erfindung betrifft die Erfindung ein Automatisierungsnetzwerk mit zumindest einem Netzwerkknoten nach Ausführungsformen der Erfindung.

Nach Ausführungsformen der Erfindung umfasst das Automatisierungsnetzwerk mehrere Netzwerkknoten nach Ausführungsformen der Erfindung. Ein erster Netzwerkknoten ist dabei mit einem zweiten Netzwerkknoten über zumindest einen der Netzwerkanschlüsse des ersten Netzwerkknotens verbunden. Der erste Netzwerkknoten ist dabei dazu ausgebildet, nur dann keine oder eine reduzierte Mengen an Daten über den Netzwerkanschluss auszugeben und/oder zu empfangen, wenn sich alle an den zweiten Netzwerkknoten angeschlossenen Netzwerkgeräte und/oder der zweite Netzwerkknoten selbst im Energiezustand befinden.

In noch einem weiteren Aspekt betrifft die Erfindung ein Computerprogrammprodukt mit Instruktionen. Die Instruktionen veranlassen einen Netzwerkknoten zur Durchführung eines Verfahrens nach Ausführungsformen der Erfindung.

Nachfolgend werden Ausführungsformen der Erfindung anhand der Figuren näher erläutert. Es zeigen:
- Figur 1: ein Blockdiagramm eines Netzwerkknotens nach Ausführungsformen der Erfindung;
- Figur 2: ein Flussdiagramm eines Verfahrens nach Ausführungsformen der Erfindung.

Elemente der nachfolgenden Figuren werden mit denselben Bezugszeichen gekennzeichnet, wenn die Funktion dieser Elemente identisch ist.

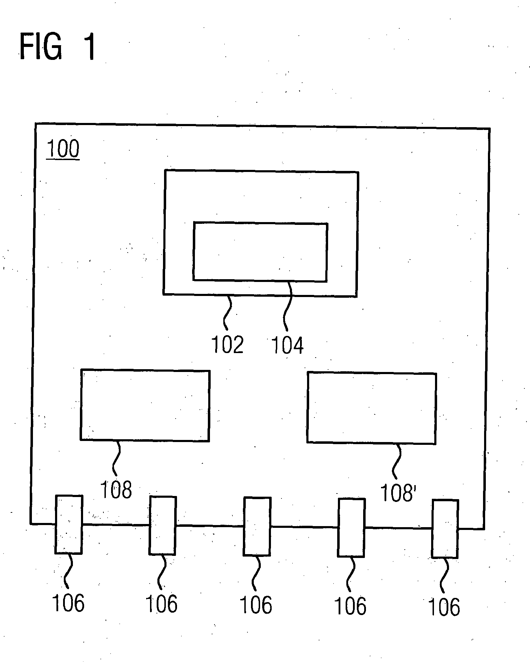

Figur 1 ist ein Blockdiagramm eines Netzwerkknotens 100. Der Netzwerkknoten 100 weist einen Datenspeicher 102 auf, in dem Programminstruktionen 104 gespeichert sind. Außerdem umfasst der Netzwerkknoten 100 zwei Prozessoren 108 und 108'. Die Prozessoren 108 und 108'sind zur Ausführung der Programminstruktionen 104 ausgebildet. Ferner umfasst der Netzwerkknoten 100 Netzwerkanschlüsse 106, an denen Netzwerkgeräte eines hier nicht dargestellten Automatisierungsnetzwerks angeschlossen sein können. Außerdem kann der Netzwerkknoten über einen der Netzwerkanschlüsse 106 direkt oder indirekt mit einem übergeordneten Controller verbunden sein, der die Programminstruktionen 104 verändern und somit das Verhalten des Netzwerkknotens 100 beeinflussen kann.

Bei Ausführung der Programminstruktionen 104 durch einen Prozessor 108 oder 108' oder durch beide Prozessoren 108 und 108' wird der Netzwerkknoten 100 zur Durchführung eines Verfahrens nach Ausführungsformen der Erfindung veranlasst. Der Netzwerkknoten 100 empfängt Daten, die an die Netzwerkgeräte an den Netzwerkanschlüssen 106 weitergeleitet werden sollen. Unter diesen Daten sind Energieeinsparbefehlsdaten für die Netzwerkgeräte. Beispielsweise können Energieeinsparbefehlsdaten von einer übergeordneten Einheit wie zum Beispiel einer speicherprogrammierbaren Steuerung über den Netzwerkknoten 100 an ein Netzwerkgerät gesendet werden. Die Energieeinsparbefehlsdaten werden durch den Netzwerkknoten 100 nach Empfang weitergeleitet und auch ausgewertet. Die Auswertung erfolgt durch zumindest einen der Prozessoren 108 und 108'. Es ist zu beachten, dass der Netzwerkknoten 100 auch nur einen Prozessor umfassen kann.

Wenn nun durch die Energieeinsparbefehlsdaten ein Netzwerkgerät, das an dem Netzwerkknoten indirekt oder direkt angeschlossen ist, in einen Energiezustand geschaltet wird, ist dies dem Netzwerkknoten 100 durch das Auswerten der Energieeinsparbefehlsdaten bekannt. Falls alle Netzwerkgeräte, die an einen bestimmten der Netzwerkanschlüsse 106 angeschlossen sind, sich im Energiezustand befinden, kann der Netzwerkknoten 100 zumindest zum Teil in einen energiesparenden Zustand geschaltet werden.

Der Energiezustand der Netzwerkgeräte kann beispielsweise ein ausgeschalteter Zustand oder ein Schlafzustand oder ein Standby-Zustand sein. Es ist auch möglich, dass es verschiedene Stufen von Energieeinsparungen in den Netzwerkgeräten gibt.

Der Netzwerkknoten 100 schaltet sich zu dem Teil ab, der zur Weiterleitung der Daten an die Netzwerkgeräte benötigt wird, die in den Energiezustand geschaltet wurden.

Wenn beispielsweise der Prozessor 108 für die Datenweiterleitung über die ersten beiden der fünf Netzwerkanschlüsse 106 ausgebildet ist, kann dieser Prozessor in einen energiesparenden Zustand geschaltet werden, wenn alle Netzwerkgeräte an den ersten beiden Netzwerkanschlüssen 106 in den Energiezustand geschaltet wurden. Dies beeinträchtigt nicht die Funktion des Prozessors 108', der für die Weiterleitung von Daten über die übrigen drei Netzwerkanschlüsse 106 des Netzwerkknotens 100 ausgebildet ist. Es ist zu beachten, dass der Netzwerkknoten 100 auch mehr oder weniger als fünf Netzwerkanschlüsse 106 aufweisen kann. Außerdem kann der Prozessor 100 auch nur einen Prozessor 108 umfassen, der beispielsweise in der Leistung reduziert wird, wenn Netzwerkgeräte in den Energiezustand geschaltet werden.

Es ist auch möglich, dass der Netzwerkknoten 100 erst dann zum Teil in den energiesparenden Zustand geschaltet wird, wenn ein Antwortsignal der Netzwerkgeräte, die in den Energiezustand geschaltet werden sollen, empfangen wurde. Dies verhindert, dass der Netzwerkknoten zumindest zum Teil in den Energiezustand geschaltet wird, obwohl die Netzwerkgeräte, die in den Energiezustand geschaltet werden sollten, nicht in den Energiezustand geschaltet wurden, weil der Empfang der Energieeinsparbefehlsdaten ignoriert wurde. Dies kann beispielsweise der Fall sein, wenn sich ein Netzwerkgerät nicht abschalten lässt, weil es im Falle der Abschaltung zu sicherheitskritischen Ereignissen kommen könnte. Aus diesem Grund ist es vorteilhaft, wenn der Netzwerkknoten 100 ein Antwortsignal der Netzwerkgeräte empfängt. Das Antwortsignal ist dabei ein Hinweis darauf, dass die Netzwerkgeräte in den Energiezustand geschaltet wurden. In diesem Fall kann der Netzwerkknoten 100 ohne Beeinflussung der Sicherheit oder das Risiko des Verlusts von Daten zumindest zum Teil in den energiesparenden Zustand geschaltet werden.

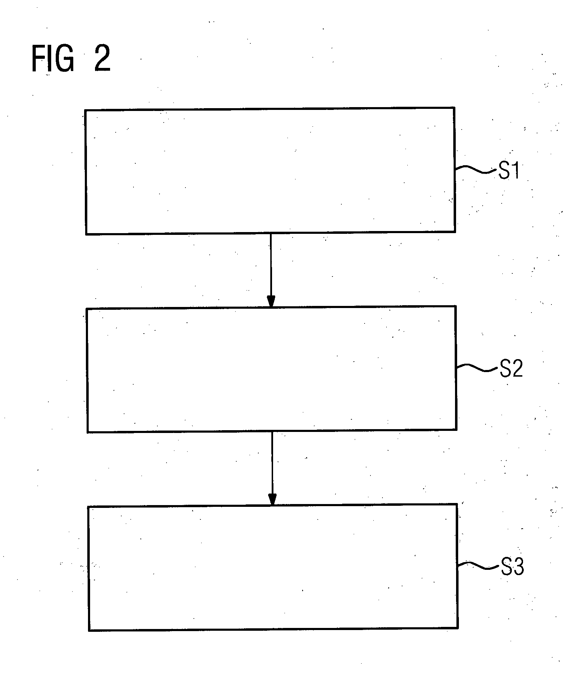

Figur 2 ist ein Flussdiagramm eines Verfahrens nach Ausführungsformen der Erfindung. In Schritt S1 werden Energieeinsparbefehlsdaten durch den Netzwerkknoten empfangen. Die Energieeinsparbefehlsdaten sind dazu bestimmt, zumindest ein Netzwerkgerät, das an dem Netzwerkknoten angeschlossen ist, in einen Energiezustand zu schalten. Im Energiezustand verbraucht dieses Netzwerkgerät weniger Energie als in einem Betriebszustand. Es ist zu beachten, dass es auch mehr als einen Energiezustand geben kann. In Schritt S2 werden die Energieeinsparbefehlsdaten an das zumindest eine Netzwerkgerät weitergeleitet und ausgewertet. Falls der Netzwerkknoten über einen Speicher verfügt, können die Energieeinsparbefehlsdaten auch gespeichert werden und erst nach der Weiterleitung ausgewertet werden. Dies kann beispielsweise dann vorteilhaft sein, wenn ein direktes Auswerten der Energieeinsparbefehlsdaten nicht möglich ist, weil der Prozessor des Netzwerkknotens mit anderen Prozessen beschäftigt ist.

Falls nun detektiert wird durch Auswerten der Energieeinsparbefehlsdaten, dass alle Netzwerkgeräte an einem Anschluss des Netzwerkknotens in den Energiezustand geschaltet wurden, wird in Schritt S3 der Netzwerkknoten in einen energiesparenden Zustand geschaltet. Dies wird dadurch erreicht, dass zumindest ein Teil des Netzwerkknotens in einen energiesparenden Zustand versetzt wird. Der Teil wird dabei durch den zumindest einen Netzwerkanschluss bestimmt, an dem die Netzwerkgeräte sich im Energiezustand befinden. Wenn beispielsweise an allen Netzwerkanschlüssen des Netzwerkknotens nur Geräte angeschlossen sind, die sich ausschließlich in einem Energiezustand befinden, kann der Netzwerkknoten auch komplett in einen energiesparenden Zustand geschaltet werden.

### Liste der Bezugszeichen

- 100: Netzwerkknoten
- 102: Speicher
- 104: Programminstruktionen
- 106: Netzwerkanschluss
- 108: Prozessor

## Patentansprüche

1. Verfahren zur Energieeinsparung in einem Netzwerkknoten (100) eines Automatisierungsnetzwerkes, wobei Netzwerkgeräte an Netzwerkanschlüssen (106) des Netzwerkknotens (100) angeschlossen sind, und wobei das Verfahren die folgenden Schritte umfasst:
- Empfang (S1) von Energie-Einspar-Befehlsdaten, wobei die Energie-Einspar-Befehlsdaten dazu bestimmt sind, zumindest eines der Netzwerkgeräte in einen Energiespar-Zustand zu schalten, wobei dieses zumindest eine Netzwerkgerät im Energiespar-Zustand weniger Energie verbraucht als in einem Betriebszustand,
- Weiterleitung (S2) der Energie-Einspar-Befehlsdaten an das zumindest eine Netzwerkgerät,
**dadurch gekennzeichnet, dass**
- Auswerten (S2) der Energie-Einspar-Befehlsdaten durch den Netzwerkknoten (100), und daraufhin
- Energieeinsparung (S3) im Netzwerkknoten (100), wobei der Netzwerkknoten (100) keine oder eine reduzierte Menge an Daten an das Netzwerkgerät ausgibt und/oder empfängt, wenn es sich im Energiespar-Zustand befindet, wobei die Energieeinsparung dadurch erfolgt, dass zumindest ein Teil des Netzwerkknotens (100) in einen energiesparenden Zustand versetzt wird, wobei der Teil durch zumindest einen der Netzwerkanschlüsse (106) bestimmt wird, über den aufgrund des Energiespar-Zustands des zumindest einen Netzwerkgeräts keine Daten oder nur eine reduzierte Menge an Daten ausgegeben und/oder empfangen werden.

2. Verfahren nach Anspruch 1, wobei der Netzwerkknoten (100) ein Antwortsignal als Antwort auf die Energie-Einspar-Befehlsdaten von dem zumindest einen Netzwerkgerät empfängt und auswertet, und wobei die Energieeinsparung im Netzwerkknoten (100) erst nach Empfang und Auswertung des zumindest einen Antwortsignals erfolgt.

3. Verfahren nach einem der vorhergehenden Ansprüche, wobei die Energie-Einspar-Befehlsdaten eine Zeitdauer oder einen Endzeitpunkt umfassen, wodurch sich die Zeitdauer definiert, für die das zumindest eine Netzwerkgerät in den Energiespar-Zustand geschaltet wird und wobei der Teil des Netzwerkknotens (100) für eine kürzere oder die gleiche Zeitdauer in den energiesparenden Zustand geschaltet wird.

4. Verfahren nach Anspruch 3, wobei der Netzwerkknoten (100) sich nach dem Ablauf der Zeitdauer selbsttätig ganz oder teilweise in den Betriebszustand und Energieeinspar-Beendigungs-Befehlsdaten erzeugt und an das zumindest eine Netzwerkgerät überträgt.

5. Verfahren nach einem der vorhergehenden Ansprüche, wobei mit zumindest einem der Netzwerkanschlüsse (106) zumindest zwei Netzwerkgeräte direkt oder indirekt verbunden sind, und wobei nur dann keine Daten oder eine reduzierte Menge an Daten über den zumindest einen Netzwerkanschluss (106) ausgegeben und/oder empfangen werden, wenn sich alle der zumindest zwei Netzwerkgeräte im Energiespar-Zustand befinden.

6. Verfahren nach einem der vorhergehenden Ansprüche, wobei das Verfahren ferner die folgenden Schritte umfasst:
- Empfang von Energieeinspar-Beendigungs-Befehlsdaten über einen Netzwerkanschluss (106), wobei die Energie-Einspar-Beendigungs-Befehlsdaten dazu bestimmt sind, bei Empfang durch das zumindest eine Netzwerkgerät dieses zumindest eine Netzwerkgerät in einen Betriebszustand mit gegenüber dem Energiespar-Zustand erhöhter Energieaufnahme zu schalten,
- Auswerten der Energie-Einspar-Beendigungs-Befehlsdaten durch den Netzwerkknoten (100), und daraufhin
- Wiederanschalten des zumindest zum Teil in den energiesparenden Zustand geschalteten Netzwerkknotens (100),
- Weiterleitung der Energie-Einspar-Beendigungs-Befehlsdaten an das zumindest eine Netzwerkgerät.

7. Verfahren nach einem der vorhergehenden Ansprüche, wobei der Netzwerkknoten (100) einen Pufferspeicher aufweist, und wobei in dem Pufferspeicher Daten gespeichert werden, die an das zumindest eine Netzwerkgerät weitergeleitet werden sollen, solange sich das zumindest eine Netzwerkgerät im Energiespar-Zustand befindet.

8. Verfahren nach einem der vorhergehenden Ansprüche, wobei der Netzwerkknoten (100) die Energie-Zustände der angeschlossenen Netzwerkgeräte in einem Zustandsspeicher speichert, wobei der Energie-Zustand eines der Netzwerkgeräte der Betriebszustand oder der Energiesparzustand des jeweiligen Netzwerkgeräts ist.

9. Verfahren nach Anspruch 8, wobei der Energie-Zustand des zumindest einen Netzwerkgeräts von einem weiteren Netzwerkgerät mittels Energie-Zustandsabfrage-Befehlsdaten, welche über den Netzwerkknoten (100) übertragen werden, abgefragt wird, und wobei der Netzwerkknoten (100) bei Empfang der Energie-Zustandsabfrage-Befehlsdaten den Zustand des Netzwerkgeräts aus dem Zustandsspeicher ausliest und ein Beantwortungssignal an das weitere Netzwerkgerät ausgibt, wobei das Beantwortungssignal den Energie-Zustand des zumindest einen Netzwerkgeräts umfasst.

10. Verfahren nach einem der vorhergehenden Ansprüche, wobei das Automatisierungsnetzwerk einen weiteren Netzwerkknoten (100) umfasst, wobei der weitere Netzwerkknoten (100) mit dem Netzwerkknoten (100) über zumindest einen der Netzwerkanschlüsse (106) verbunden ist, und wobei weitere Netzwerkgeräte an dem weiteren Netzwerkknoten (100) angeschlossen sind, und wobei nur dann keine Daten oder eine reduzierte Menge an Daten zu den Netzwerkgeräten über den Netzwerkanschluss (106) an den weiteren Netzwerkknoten (100) ausgegeben werden, wenn sich alle an dem weiteren Netzwerkknoten (100) angeschlossenen weiteren Netzwerkgeräte im Energiespar-Zustand befinden.

11. Verfahren nach einem der vorhergehenden Ansprüche, wobei die Verbindung zwischen dem Netzwerkknoten (100) und dem zumindest einen Netzwerkgerät eine sicherheitsrelevante Verbindung des Automatisierungsnetzwerks ist, und wobei trotz der Energieeinsparung im Netzwerkknoten (100) die sicherheitsrelevante Verbindung aufrechterhalten wird.

12. Netzwerkknoten (100) für ein Automatisierungsnetzwerk mit
- Mitteln (106) zum Empfang von Energie-Einspar-Befehlsdaten, wobei die Energie-Einspar-Befehlsdaten dazu bestimmt sind, zumindest eines der Netzwerkgeräte in einen Energiespar-Zustand zu schalten, wobei dieses zumindest eine Netzwerkgerät im Energiespar-Zustand weniger Energie verbraucht als in einem Betriebszustand,
- Mitteln (104; 108; 108') zur Weiterleitung der Energie-Einspar-Befehlsdaten an das zumindest eine Netzwerkgerät,
**dadurch gekennzeichnet, daß**
- Mitteln(104; 108; 108') zum Auswerten der Energie-Einspar-Befehlsdaten, und
- Mitteln (104; 108; 108') zur Energieeinsparung im Netzwerkknoten (100), wobei der Netzwerkknoten (100) keine oder eine reduzierte Menge an Daten an das Netzwerkgerät ausgibt und/oder empfängt, wenn es sich im Energiespar-Zustand befindet, wobei die Energieeinsparung dadurch erfolgt, dass zumindest ein Teil des Netzwerkknotens (100) in einen energiesparenden Zustand geschaltet wird, wobei der Teil durch den zumindest einen Netzwerkanschluss (106) bestimmt wird, über den aufgrund des Energiespar-Zustands des zumindest einen Netzwerkgeräts keine Daten oder nur eine reduzierte Menge an Daten ausgegeben und/oder empfangen werden.

13. Netzwerkknoten (100) nach Anspruch 12, wobei der Netzwerkknoten (100) zur Durchführung eines Verfahrens nach einem der Ansprüche 1-11 ausgebildet ist.

14. Automatisierungsnetzwerk mit zumindest einem Netzwerkknoten (100) nach Anspruch 12 oder 13.

## Claims

1. Method for saving energy at a network node (100) in an automation network, wherein network devices are connected to network ports (106) at the network node (100), and wherein the method comprises the following steps:
- energy saving command data are received (S1), wherein the energy saving command data are intended to switch at least one of the network devices to an energy saving state, wherein said at least one network device consumes less energy in the energy saving state than in an operating state,
- the energy saving command data are forwarded (S2) to the at least one network device,
**characterized in that**
- the energy saving command data are evaluated (S2) by the network node (100), and then
- energy is saved (S3) at the network node (100), wherein the network node (100) receives and/or outputs no or a reduced volume of data to the network device when it is in the energy saving state, wherein the energy saving is effected by virtue of at least one portion of the network node (100) being put into an energy saving state, wherein the portion is determined by at least one of the network ports (106), which, on account of the energy saving state of the at least one network device, is being used to output and/or receive no data or just a reduced volume of data.

2. Method according to Claim 1, wherein the network node (100) receives and evaluates a response signal in response to the energy saving command data from the at least one network device, and wherein the energy saving at the network node (100) is effected only after the at least one response signal has been received and evaluated.

3. Method according to one of the preceding claims, wherein the energy saving command data comprise a period or an end time, which defines the period for which the at least one network device is switched to the energy saving state, and wherein the portion of the network node (100) is switched to the energy saving state for a shorter period or the same period.

4. Method according to Claim 3, wherein, after the period has elapsed, the network node (100) automatically switches itself fully or partially to the operating state and produces energy saving termination command data and transmits the latter to the at least one network device.

5. Method according to one of the preceding claims, wherein at least one of the network ports (106) has at least two network devices connected to it directly or indirectly, and wherein no data or a reduced volume of data is output and/or received via the at least one network port (106) only when all of the at least two network devices are in the energy saving state.

6. Method according to one of the preceding claims, wherein the method also comprises the following steps:
- energy saving termination command data are received via a network port (106), wherein the energy saving termination command data are intended, when received by the at least one network device, to switch said at least one network device to an operating state with increased energy intake in comparison with the energy saving state,
- the energy saving termination command data are evaluated by the network node (100), and then
- the network node (100) which has at least partially been switched to the energy saving state is switched on again,
- the energy saving termination command data are forwarded to the at least one network device.

7. Method according to one of the preceding claims, wherein the network node (100) has a buffer store, and wherein the buffer store is used to store data which are intended to be forwarded to the at least one network device so long as the at least one network device is in the energy saving state.

8. Method according to one of the preceding claims, wherein the network node (100) stores the energy states of the connected network devices in a state memory, wherein the energy state of one of the network devices is the operating state or the energy saving state of the respective network device.

9. Method according to Claim 8, wherein the energy state of the at least one network device is requested by a further network device by using energy state request command data which are transmitted via the network node (100), and wherein the network node (100), upon receiving the energy state request command data, reads the state of the network device from the state memory and outputs a response signal to the further network device, wherein the response signal comprises the energy state of the at least one network device.

10. Method according to one of the preceding claims, wherein the automation network comprises a further network node (100), wherein the further network node (100) is connected to the network node (100) via at least one of the network ports (106), and wherein further network devices are connected to the further network node (100), and wherein no data or a reduced volume of data for the network devices is output to the further network node (100) via the network port (106) only when all further network devices connected to the further network node (100) are in the energy saving state.

11. Method according to one of the preceding claims, wherein the connection between the network node (100) and the at least one network device is a safety-relevant connection in the automation network, and wherein the safety-relevant connection is maintained despite the energy saving at the network node (100).

12. Network node (100) for an automation network having
- means (106) for receiving energy saving command data, wherein the energy saving command data are intended to switch at least one of the network devices to an energy saving state, wherein said at least one network device consumes less energy in the energy saving state than in an operating state,
- means (104; 108; 108') for forwarding the energy saving command data to the at least one network device,
**characterized by**
- means (104; 108; 108') for evaluating the energy saving command data, and
- means (104; 108; 108') for saving energy at the network node (100), wherein the network node (100) receives and/or outputs no or a reduced volume of data to the network device when it is in the energy saving state, wherein the energy saving is effected by virtue of at least one portion of the network node (100) being switched to an energy saving state, wherein the portion is determined by the at least one network port (106), which, on account of the energy saving state of the at least one network device, is being used to output and/or receive no data or just a reduced volume of data.

13. Network node (100) according to Claim 12, wherein the network node (100) is designed to carry out a method according to one of Claims 1-11.

14. Automation network having at least one network node (100) according to Claim 12 or 13.

## Revendications

1. Procédé pour économiser de l'énergie dans un noeud (100) d'un réseau d'automatisation, des appareils de réseau étant raccordés à des accès (106) au réseau du noeud (100) de réseau et le procédé comprenant les stades suivants :
- réception (S1) de données d'instruction d'économie d'énergie, les données d'instruction d'économie d'énergie étant définies pour mettre au moins l'un des appareils de réseau dans un état d'économie d'énergie, cet au moins un appareil de réseau dans un état d'économie d'énergie consommant moins d'énergie que dans un état de fonctionnement,
- acheminement (S2) des données d'instruction d'économie d'énergie vers le au moins un réseau d'énergie, **caractérisé en ce qu'**il comprend les stades :
- exploitation (S2) des données d'instruction d'économie d'énergie par le noeud (100) du réseau et ensuite,
- économie (S3) d'énergie dans le noeud (100) du réseau, le noeud (100) du réseau n'envoyant pas à l'appareil de réseau et/ou ne recevant pas ou qu'un nombre réduit de données lorsqu'il se trouve dans l'état d'économie d'énergie, l'économie d'énergie s'effectuant par le fait qu'au moins une partie du noeud (100) du réseau est mise dans un état d'économie d'énergie, la partie étant définie par au moins l'un des accès (106) du réseau par lequel, en raison de l'état d'économie d'énergie du au moins un appareil de réseau, pas de données ou qu'un nombre réduit de données sont envoyées et/ou reçues.

2. Procédé suivant la revendication 1, dans lequel le noeud (100) du réseau reçoit du au moins un appareil de réseau un signal de réponse comme réponse aux données d'instruction d'économie d'énergie et l'exploite et l'économie d'énergie s'effectue dans le noeud (100) de réseau seulement après la réception et l'exploitation du au moins un signal de réponse.

3. Procédé suivant la revendication 1, dans lequel les données d'instruction d'économie d'énergie comprennent une durée ou un instant final par lequel se définit la durée pendant laquelle le au moins un appareil de réseau est mis dans l'état d'économie d'énergie et la partie du noeud (100) de réseau est mise pendant une durée plus courte ou pendant la même durée dans l'état d'économie d'énergie.

4. Procédé suivant la revendication 3, dans lequel le noeud (100) de réseau produit, après que la durée s'est écoulée, automatiquement des données d'instruction, mettant en tout ou partie dans l'état de fonctionnement et mettant fin à l'économie d'énergie, et les transmets au au moins un appareil de réseau.

5. Procédé suivant l'une des revendications précédentes, dans lequel, par au moins l'un des accès (106) au réseau, au moins deux appareils de réseau sont reliés directement ou indirectement et pas de données ou un nombre réduit de données sont envoyées et/ou reçues par le au moins un accès au réseau lorsque tous les au moins deux appareils de réseau se trouvent dans l'état d'économie d'énergie.

6. Procédé suivant l'une des revendications précédentes, dans lequel le procédé comprend en outre les stades suivants :
- réception de données d'instruction mettant fin à l'économie d'énergie par un accès (106) au réseau, les données d'instruction mettant fin à l'économie d'énergie étant définies pour, à la réception par le au moins un appareil de réseau, mettre cet au moins un appareil de réseau dans un état de fonctionnement absorbant davantage d'énergie que l'état d'économie d'énergie,
- exploitation des données d'instruction mettant fin à l'économie d'énergie par le noeud (100) de réseau et ensuite
- raccordement à nouveau du noeud (100) de réseau mis en partie dans l'état d'économie d'énergie,
- acheminement des données d'instruction mettant fin à l'économie d'énergie vers le au moins un appareil de réseau.

7. Procédé suivant l'une des revendications précédentes, dans lequel le noeud (100) de réseau a une mémoire tampon et dans lequel on mémorise dans la mémoire tampon des données, qui doivent être acheminées au au moins un appareil de réseau, tant que le au moins un appareil de réseau se trouve dans l'état d'économie d'énergie.

8. Procédé suivant l'une des revendications précédentes, dans lequel le noeud (100) de réseau mémorise dans une mémoire d'état les états d'énergie des appareils de réseau raccordés, l'état d'énergie de l'un des appareils de réseau étant l'état de fonctionnement ou l'état d'économie d'énergie de l'appareil de réseau respectif.

9. Procédé suivant la revendication 8, dans lequel l'état d'énergie du au moins un appareil de réseau est interrogé par un autre appareil de réseau au moyen de données d'instruction d'interrogation d'état d'énergie, qui sont transmises par le noeud (100) de réseau, et dans lequel le noeud (100) de réseau, à la réception des données d'instruction d'interrogation d'état d'énergie, lit l'état de l'appareil de réseau dans la mémoire d'état et envoie un signal de réponse à l'autre appareil de réseau, le signal comprenant l'état d'énergie du au moins un appareil de réseau.

10. Procédé suivant l'une des revendications précédentes, dans lequel le réseau d'automatisation comprend un autre noeud (100), l'autre noeud (100) de réseau étant relié au noeud (100) de réseau par au moins l'un des accès (106) au réseau, et dans lequel d'autres appareils de réseau sont raccordés à l'autre noeud (100) de réseau et pas de données ou un nombre réduit de données sont envoyées des appareils de réseau à l'autre noeud (100) de réseau par l'accès (106) au réseau, seulement quand tous les autres appareils de réseau raccordés à l'autre noeud (100) de réseau se trouvent dans l'état d'économie d'énergie.

11. Procédé suivant l'une des revendications précédentes, dans lequel la liaison entre le noeud (100) de réseau et le au moins un appareil de réseau est une liaison sécurisée du réseau d'automatisation et dans lequel, en dépit de l'économie d'énergie dans le noeud (100) de réseau, la liaison sécurisée est maintenue.

12. Noeud (100) de réseau pour un réseau d'automatisation comprenant
- des moyens (106) de réception de données d'instruction d'économie d'énergie, les données d'instruction d'économie d'énergie étant définies pour mettre au moins l'un des appareils de réseau dans un état d'économie d'énergie, cet au moins un appareil de réseau consommant moins d'énergie dans l'état d'économie d'énergie que dans un état de fonctionnement,
- des moyens (104, 108, 108') d'acheminement des données d'instruction d'économie d'énergie vers le au moins un appareil de réseau, **caractérisé par**
- des moyens (104, 108, 108') d'exploitation des données d'instruction d'économie d'énergie et
- des moyens (104, 108, 108') d'économie d'énergie dans le noeud (100) de réseau, le noeud (100) de réseau n'envoyant à l'appareil de réseau et/ou ne recevant pas ou un nombre réduit de données lorsqu'il se trouve dans l'état d'économie d'énergie, l'économie d'énergie s'effectuant par le fait qu'au moins une partie du noeud (100) de réseau est mise dans un état économisant de l'énergie, la partie étant définie par le au moins un accès (106) au réseau par lequel, en raison de l'état d'économie d'énergie du au moins un appareil de réseau, pas de données ou seulement un nombre réduit de données sont envoyées et/ou reçues.

13. Noeud (100) de réseau suivant la revendication 12, dans lequel le noeud (100) de réseau est constitué, pour effectuer un procédé suivant l'une des revendications 1 à 11.

14. Réseau d'automatisation ayant au moins un noeud (100) suivant la revendication 12 ou 13.
